# EUROPEAN PATENT APPLICATION

(11) **EP 4 723 037 A1**
(43) Date of publication of application: **08.04.2026**
(21) Application number: 24942091.0
(22) Date of filing: 07.11.2024
(51) Int. Cl.: G06T 7/246, G06V 40/20

(54) **GESTURE TRACKING METHOD AND APPARATUS, AND COMPUTER DEVICE AND READABLE STORAGE MEDIUM**

(30) Priority: 15.08.2024 CN 202411118583
(71) Applicant: Hangzhou Ruijian Zhixing Technology Co., Ltd., Hangzhou, Zhejiang 311222 (CN)
(72) Inventor: XU, Han, Hangzhou, Zhejiang 311222 (CN); ZHU, Yuanzheng, Hangzhou, Zhejiang 311222 (CN); YANG, Yihong, Hangzhou, Zhejiang 311222 (CN); LIU, Guoqing, Hangzhou, Zhejiang 311222 (CN)
(74) Representative: Vogelbruch, Keang
(86) International application number: PCT/CN2024/130596
(87) International publication number: WO 2026/036536

(57) **Abstract**

The present invention provides a gesture tracking method and apparatus, a computer device, and a readable storage medium. The gesture tracking method includes: acquiring a vehicle cabin video data stream, and capturing images from the vehicle cabin video data stream to obtain a plurality of image frames; triggering hand detection on image frames at preset time intervals to obtain hand position information for each triggered image frame; determining, for each triggered image frame, hand position information for each non-triggered image frame based on the hand position information for the triggered image frame; matching the hand position information for each hand based on the hand position information for every two consecutive image frames to obtain a matching result of the hand position information for each hand; and determining a dynamic gesture in the vehicle cabin video data stream based on the matching result of the hand position information for each hand in every two consecutive image frames. This method reduces the computational power required for gesture tracking, thereby lowering the requirements for device computing capability, minimizing limitations, and ensuring normal gesture tracking through various devices.

## Description

### CROSS-REFERENCE TO RELATED APPLICATIONS

The present invention claims the priority to the Chinese patent application with the filling No. 202411118583.8 filed with the Chinese Patent Office on August 15, 2024, and entitled "GESTURE TRACKING METHOD AND APPARATUS, COMPUTER DEVICE, AND READABLE STORAGE MEDIUM", the contents of which are incorporated herein by reference in entirety.

### TECHNICAL FIELD

The present invention relates to the field of computer technology, in particular to a gesture tracking method and apparatus, a computer device, and a readable storage medium.

### BACKGROUND ART

With the rapid development of the automotive industry, intelligent cabin technology has become a key factor in enhancing the competitiveness of modem vehicles. An intelligent cabin is not only a driving space but also an advanced human-computer interaction platform integrating various sensors and interaction interfaces. On this platform, multi-hand tracking and matching technology are particularly important as they directly relate to user operational convenience and safety. Multi-hand tracking technology allows the system to monitor and identify the hands of the driver and passengers in real time through cameras. The maintained hand temporal action information is converted into corresponding commands, such as adjusting volume, switching tracks, answering calls, etc. This non-physical-contact interaction method greatly enriches the experience of drivers and passengers while reducing distractions during driving and enhancing driving safety.

In the prior art, when tracking gestures, the gesture detection processing solution used involves applying a deep learning model to each frame of the video stream for detection processing to output hand gesture box information, and then performing gesture tracking based on the gesture box information output by the model. However, previous research indicates that since the deep learning model needs to be invoked to detect and process each frame of the image, a large amount of computational power is consumed. This makes existing gesture detection processing solutions highly demanding on device computing capability, with significant limitations, making it difficult to apply to devices with weaker computing performance. For some vehicle cabin systems and devices with weaker computing performance, if sufficient computational resources cannot be provided for multiple model runs, gesture tracking cannot be achieved through existing gesture detection processing.

### SUMMARY

In view of this, an objective of the present invention is to provide a gesture tracking method and apparatus, a computer device, and a readable storage medium, to reduce the computational power required for gesture tracking, lower the requirements for device computing capability during gesture tracking, minimize the limitations of gesture tracking, and ensure normal gesture tracking through various devices.

In a first aspect, an embodiment of the present invention provides a gesture tracking method. The method includes:
acquiring a vehicle cabin video data stream, and capturing images from the vehicle cabin video data stream to obtain a plurality of image frames;
triggering hand detection on image frames at preset time intervals to obtain hand position information for each triggered image frame, wherein the hand position information contains coordinate information for a hand bounding box for each hand;
determining, for each triggered image frame, hand position information for each non-triggered image frame based on the hand position information for the triggered image frame, wherein a non-triggered image frame is a video frame subsequent to the triggered image frame and prior to a subsequent triggered image frame;
matching the hand position information for each hand based on the hand position information for every two consecutive image frames to obtain a matching result of the hand position information for each hand, wherein the matching result is either a matching success or a matching failure; and
determining a dynamic gesture in the vehicle cabin video data stream based on the matching result of the hand position information for each hand in every two consecutive image frames.

Optionally, after the determining, for each triggered image frame, hand position information for each non-triggered image frame based on the hand position information for the triggered image frame, the method further includes:
determining hand keypoints and a confidence of each hand keypoint for each hand in each non-triggered image frame based on the hand position information for each non-triggered image frame;
for each non-triggered image frame, determining whether the average confidence of the hand keypoints of each hand in the non-triggered image frame exceeds a preset threshold;
if the average confidence of the hand keypoints of each hand in the non-triggered image frame does not exceed the preset threshold, triggering hand detection on the non-triggered image frame to obtain new hand position information for the non-triggered image frame; and
updating the hand position information for the non-triggered image frame determined based on the hand position information for the triggered image frame by using the new hand position information for the non-triggered image frame.

Optionally, the triggering hand detection on image frames at preset time intervals to obtain hand position information for each triggered image frame includes:
performing downsampling processing on each triggered image; and
inputting the downsampled triggered images into a trained hand detection model to obtain the hand position information for each triggered image frame.

Optionally, the determining hand position information for each non-triggered image frame based on the hand position information for the triggered image frame includes:
expanding the coordinate information for the hand bounding box for each hand in the triggered image frame by a preset multiple to obtain coordinate information for the hand bounding box for each non-triggered image frame, thereby determining the hand position information for each non-triggered image frame.

Optionally, the matching the hand position information for each hand based on the hand position information for every two consecutive image frames to obtain a matching result of the hand position information for each hand includes:
determining hand keypoint position information for each hand in each image frame based on the hand position information for each image frame;
for every two consecutive image frames, constructing a weighted bipartite graph based on the hand keypoint position information and handedness information for each hand in the two consecutive image frames; and
based on the weighted bipartite graph, matching the hand position information for each hand in the two consecutive image frames by using a KM algorithm, to obtain the matching result of the hand position information for each hand.

Optionally, the determining hand keypoint position information for each hand in each image frame based on the hand position information for each image frame includes:
cropping the image regions indicated by the hand position information for each image frame to obtain hand images for each hand; and
inputting the hand images for each hand into a trained hand keypoint regression model to obtain the hand keypoint positions for each hand.

Optionally, the determining a dynamic gesture in the vehicle cabin video data stream based on the matching result of the hand position information for each hand in every two consecutive image frames includes:
for each hand, when the matching result of the hand position information for the hand in every two consecutive image frames is the matching failure, constructing a hand action sequence with the hand in a subsequent image frame of the every two consecutive image frames as the start of a new hand action sequence;
when the matching result of the hand position information for the hand in every two consecutive image frames is the matching success, constructing a hand action sequence with the hand in the every two consecutive image frames as a continuous part of the same hand action sequence; and
generating the dynamic gesture in the vehicle cabin video data stream based on the constructed hand action sequence.

In a second aspect, an embodiment of the present invention provides a dynamic gesture tracking apparatus. The apparatus includes:
an image frame acquisition module, configured to acquire a vehicle cabin video data stream, and capture images from the vehicle cabin video data stream to obtain a plurality of image frames;
a first hand position information determination module, configured to trigger hand detection on image frames at preset time intervals to obtain hand position information for each triggered image frame, wherein the hand position information contains coordinate information for a hand bounding box for each hand;
a second hand position information determination module, configured to determine, for each triggered image frame, hand position information for each non-triggered image frame based on the hand position information for the triggered image frame, wherein a non-triggered image frame is a video frame subsequent to the triggered image frame and prior to a subsequent triggered image frame;
a hand position information matching module, configured to match the hand position information for each hand based on the hand position information for every two consecutive image frames to obtain a matching result of the hand position information for each hand, wherein the matching result is either a matching success or a matching failure; and
a dynamic gesture tracking module, configured to determine a dynamic gesture in the vehicle cabin video data stream based on the matching result of the hand position information for each hand in every two consecutive image frames.

Optionally, the apparatus further includes a position information update module, which is configured to:
after the determining, for each triggered image frame, hand position information for each non-triggered image frame based on the hand position information for the triggered image frame, determine hand keypoints and a confidence of each hand keypoint for each hand in each non-triggered image frame based on the hand position information for each non-triggered image frame;
for each non-triggered image frame, determine whether the average confidence of the hand keypoints of each hand in the non-triggered image frame exceeds a preset threshold;
if the average confidence of the hand keypoints of each hand in the non-triggered image frame does not exceed the preset threshold, trigger hand detection on the non-triggered image frame to obtain new hand position information for the non-triggered image frame; and
update the hand position information for the non-triggered image frame determined based on the hand position information for the triggered image frame by using the new hand position information for the non-triggered image frame.

Optionally, the triggering hand detection on image frames at preset time intervals to obtain hand position information for each triggered image frame includes:
performing downsampling processing on each triggered image; and
inputting the downsampled triggered images into a trained hand detection model to obtain the hand position information for each triggered image frame.

Optionally, the determining hand position information for each non-triggered image frame based on the hand position information for the triggered image frame includes:
expanding the coordinate information for the hand bounding box for each hand in the triggered image frame by a preset multiple to obtain coordinate information for the hand bounding box for each non-triggered image frame, thereby determining the hand position information for each non-triggered image frame.

Optionally, the matching the hand position information for each hand based on the hand position information for every two consecutive image frames to obtain a matching result of the hand position information for each hand includes:
determining hand keypoint position information for each hand in each image frame based on the hand position information for each image frame;
for every two consecutive image frames, constructing a weighted bipartite graph based on the hand keypoint position information and handedness information for each hand in the two consecutive image frames; and
based on the weighted bipartite graph, matching the hand position information for each hand in the two consecutive image frames by using a KM algorithm, to obtain the matching result of the hand position information for each hand.

Optionally, the determining hand keypoint position information for each hand in each image frame based on the hand position information for each image frame includes:
cropping the image regions indicated by the hand position information for each image frame to obtain hand images for each hand; and
inputting the hand images for each hand into a trained hand keypoint regression model to obtain the hand keypoint positions for each hand.

Optionally, the determining a dynamic gesture in the vehicle cabin video data stream based on the matching result of the hand position information for each hand in every two consecutive image frames includes:
for each hand, when the matching result of the hand position information for the hand in every two consecutive image frames is the matching failure, constructing a hand action sequence with the hand in a subsequent image frame of the every two consecutive image frames as the start of a new hand action sequence;
when the matching result of the hand position information for the hand in every two consecutive image frames is the matching success, constructing a hand action sequence with the hand in the every two consecutive image frames as a continuous part of the same hand action sequence; and
generating the dynamic gesture in the vehicle cabin video data stream based on the constructed hand action sequence.

In a third aspect, an embodiment of the present invention provides a computer device, including a processor, a memory, and a bus, wherein the memory stores machine-readable instructions executable by the processor; when the computer device is in operation, the processor communicates with the memory via the bus; and the machine-readable instructions, when executed by the processor, cause the processor to perform the steps of the gesture tracking method according to any one of the optional implementations in the first aspect.

In a fourth aspect, an embodiment of the present invention provides a computer-readable storage medium storing a computer program that, when executed by a processor, causes the processor to perform the steps of the gesture tracking method according to any one of the optional implementations in the first aspect.

The technical solutions provided by the present invention include but are not limited to the following beneficial effects.

According to the present invention, a vehicle cabin video data stream is acquired, image capture is performed on the vehicle cabin video data stream to obtain a plurality of image frames, and then hand detection on image frames is triggered at preset time intervals to obtain hand position information for each triggered image frame. This reduces the number of image frames requiring hand detection and the frequency of hand detection, as hand detection is only performed on triggered image frames, thereby lowering the computational power required for gesture tracking.

Then, for each triggered image frame, the hand position information for each non-triggered image frame is determined based on the hand position information for the triggered image frame. This allows for determining hand position information in non-triggered image frames without performing hand detection on other non-triggered image frames that have not undergone hand detection, thereby providing complete hand position information for each image frame for gesture detection.

Finally, the hand position information for each hand is matched based on the hand position information for every two consecutive image frames to obtain a matching result of the hand position information for each hand, and the dynamic gesture in the vehicle cabin video data stream is determined based on the matching result of the hand position information for each hand in every two consecutive image frames. This enables tracking, identification, and detection of dynamic gestures in the vehicle cabin video based on the matching result of hand position information in each image frame, achieving low-computational-power gesture tracking within the vehicle cabin.

By adopting the above solution, the number of hand detection triggers is limited. The model is only invoked to perform hand detection on image frames that have triggered hand detection, and is not used for image frames that have not triggered hand detection. This significantly reduces computational power consumption during gesture tracking. Simultaneously, based on the hand detection results of image frames that have triggered hand detection, the hand detection results of image frames that have not triggered hand detection are determined. This provides complete and accurate hand data for subsequent hand matching, effectively reduces missed hand detections, and improves the accuracy of hand detection. During gesture tracking, non-triggered image frames with inaccurate hand detection results are re-detected, reducing the probability of failing to track hands due to fast movement, and improving the accuracy of hand detection results. After trigger detection, a bipartite graph is constructed with specific weights, and the optimal matching is solved using a KM algorithm, which can accurately maintain the temporal information for hands. Thus, by reducing the computational power consumed for gesture tracking, lowering the requirements for device computing capability during gesture tracking, and minimizing the limitations of gesture tracking, it ensures accurate gesture tracking through various devices.

To make the above objectives, features, and advantages of the present invention more apparent and easier to understand, preferred embodiments are described in detail below with reference to the accompanying drawings.

### BRIEF DESCRIPTION OF DRAWINGS

To more clearly illustrate the technical solutions of the embodiments of the present invention, the following briefly introduces the accompanying drawings required for describing the embodiments. It should be understood that the following drawings show only certain embodiments of the present invention and therefore should not be considered as limiting the scope. For those ordinarily skilled in the art, other related drawings can be obtained based on these drawings without creative effort.
FIG. 1 illustrates a flowchart of a gesture tracking method provided by Embodiment 1 of the present invention;
FIG. 2 illustrates a flowchart of a position information update method provided by Embodiment 1 of the present invention;
FIG. 3 illustrates a flowchart of a position information determination method provided by Embodiment 1 of the present invention;
FIG. 4 illustrates a flowchart of a hand position information matching method provided by Embodiment 1 of the present invention;
FIG. 5 illustrates a flowchart of a hand keypoint positioning method provided by Embodiment 1 of the present invention;
FIG. 6 illustrates a flowchart of a dynamic gesture determination method provided by Embodiment 1 of the present invention;
FIG. 7 illustrates a flowchart of a gesture tracking method in an intelligent cabin provided by Embodiment 1 of the present invention;
FIG. 8 illustrates a schematic structural diagram of a dynamic gesture tracking apparatus provided by Embodiment 2 of the present invention; and
FIG. 9 illustrates a schematic structural diagram of a computer device provided by Embodiment 3 of the present invention.

### DETAILED DESCRIPTION OF EMBODIMENTS

To make the objectives, technical solutions, and advantages of the embodiments of the present invention clearer, the technical solutions in the embodiments of the present invention will be described clearly and completely in conjunction with the accompanying drawings in the embodiments of the present invention. Apparently, the described embodiments are only some rather than all of the embodiments of the present invention. The components of the embodiments of the present invention generally described and illustrated in the drawings herein may be arranged and designed in various different configurations. Therefore, the following detailed description of the embodiments of the present invention provided in the accompanying drawings is not intended to limit the scope of the claimed disclosure, but merely represents selected embodiments thereof. Based on the embodiments of the present invention, all other embodiments obtained by those skilled in the art without creative effort shall fall within the scope of protection of the present invention.

### Embodiment 1

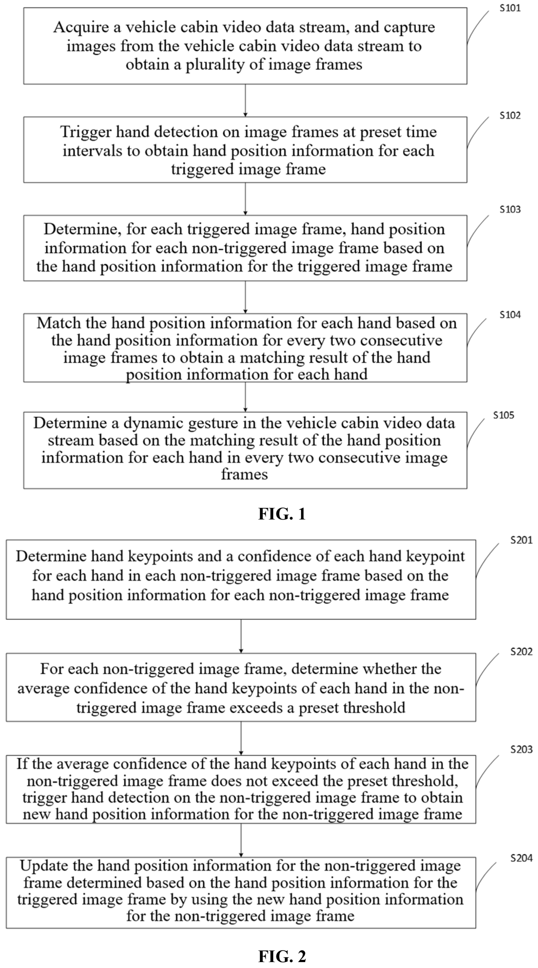

To facilitate understanding of the present invention, Embodiment 1 of the present invention is described in detail below with reference to the content illustrated in the flowchart of a gesture tracking method provided in Embodiment 1 of the present invention shown in FIG. 1.

Referring to FIG. 1, which illustrates a flowchart of a gesture tracking method provided by Embodiment 1 of the present invention, the method includes steps S101 to S104.

S101: acquiring a vehicle cabin video data stream, and capturing images from the vehicle cabin video data stream to obtain a plurality of image frames.

Specifically, when a vehicle cabin occupant enters the cabin, a camera captures the vehicle cabin video data stream, and hand detection is performed on each image frame.

S102: triggering hand detection on image frames at preset time intervals to obtain hand position information for each triggered image frame, wherein the hand position information contains coordinate information for a hand bounding box for each hand.

Specifically, hand detection is triggered every 500 ms. The image frame triggered for hand detection is referred to as a triggered image frame. For each triggered image frame, hand detection is performed using the Nanodet-Plus hand detection model to obtain the hand position information for the triggered image frame, i.e., the coordinate information for the hand bounding box for each hand contained in the triggered image frame, specifically the horizontal and vertical coordinates of the upper-left and lower-right corners of the hand bounding box.

S103: determining, for each triggered image frame, hand position information for each non-triggered image frame based on the hand position information for the triggered image frame, wherein a non-triggered image frame is a video frame subsequent to the triggered image frame and prior to a subsequent triggered image frame.

Specifically, since hand detection is performed at preset time intervals, there are several non-triggered image frames between every two hand detections, i.e., between every two adjacent triggered image frames, that have not undergone hand detection. For these non-triggered image frames without hand detection, the hand position information for the non-triggered image is determined based on the hand position information for the historically nearest triggered image frame to the non-triggered image frame.

S104: matching the hand position information for each hand based on the hand position information for every two consecutive image frames to obtain a matching result of the hand position information for each hand, wherein the matching result is either a matching success or a matching failure.

Specifically, for each image frame, the hand position information for the current image frame and the hand position information for the preceding image frame are matched using weighted bipartite graph optimal matching to obtain the optimal matching result.

S105: determining a dynamic gesture in the vehicle cabin video data stream based on the matching result of the hand position information for each hand in every two consecutive image frames.

Specifically, for each image frame, if the hand position information for the current image frame fails to match the hand position information for the preceding image frame (i.e., matching failure), the unmatched hand in the current image frame is assigned a new hand identifier, indicating the start of a new hand action sequence. If the hand position information for the current image frame successfully matches the hand position information for the preceding image frame, the two matched hands are considered continuous parts of the same hand action sequence, and the hand in the current image frame inherits the hand identifier of the preceding image frame. The start of a new hand action sequence is treated as the start of a dynamic gesture, and the continuous parts of each hand action sequence are treated as components after the start of the dynamic gesture, thereby constructing the dynamic gesture.

In an optional embodiment, referring to FIG. 2, which illustrates a flowchart of a position information update method provided by Embodiment 1 of the present invention, after the determining, for each triggered image frame, hand position information for each non-triggered image frame based on the hand position information for the triggered image frame, the method further includes steps S201 to S204.

S201: determining hand keypoints and a confidence of each hand keypoint for each hand in each non-triggered image frame based on the hand position information for each non-triggered image frame.

Specifically, based on the hand position information for each non-triggered image frame, hand images containing each hand are cropped. Hand images for each hand are then input into a hand 21-point keypoint regression model to obtain the specific positions of 21 hand skeleton points in each non-triggered image and the confidence of each point. The hand 21-point keypoint regression model uses a lightweight QaRepVgg feature extraction network and is trained with two loss functions: RLEloss for hand keypoint localization tasks, outputting the coordinates and confidence of each hand keypoint; and CrossEntropyLoss for determining the handedness, outputting whether the hand is left or right.

S202: for each non-triggered image frame, determining whether the average confidence of the hand keypoints of each hand in the non-triggered image frame exceeds a preset threshold.

Specifically, for each non-triggered image frame, the average confidence of the hand keypoints of each hand in the non-triggered image frame is calculated, and it is determined whether the average confidence exceeds a preset threshold, e.g., 0.2.

S203: if the average confidence of the hand keypoints of each hand in the non-triggered image frame does not exceed the preset threshold, triggering hand detection on the non-triggered image frame to obtain new hand position information for the non-triggered image frame.

Specifically, if the average confidence of the hand keypoints of each hand in the non-triggered image frame does not exceed the preset threshold, the keypoint detection of the non-triggered image frame is considered inaccurate. Hand detection is then triggered on the non-triggered image frame, and the Nanodet-Plus hand detection model is used to perform hand detection on the non-triggered image frame to obtain accurate new hand position information.

S204: updating the hand position information for the non-triggered image frame determined based on the hand position information for the triggered image frame by using the new hand position information for the non-triggered image frame.

Specifically, the new hand position information for the non-triggered image frame is used to update the hand position information for the non-triggered image frame obtained in step S103, so that step S104 performs hand matching based on the new hand position information for the non-triggered image frame.

If the average confidence of the hand keypoints of each hand in the non-triggered image frame exceeds the preset threshold, the keypoint detection of the non-triggered image frame is considered accurate and usable. Hand detection on the non-triggered image frame is not required to be triggered, and hand matching is performed directly based on the hand position information for the non-triggered image frame obtained in step S103.

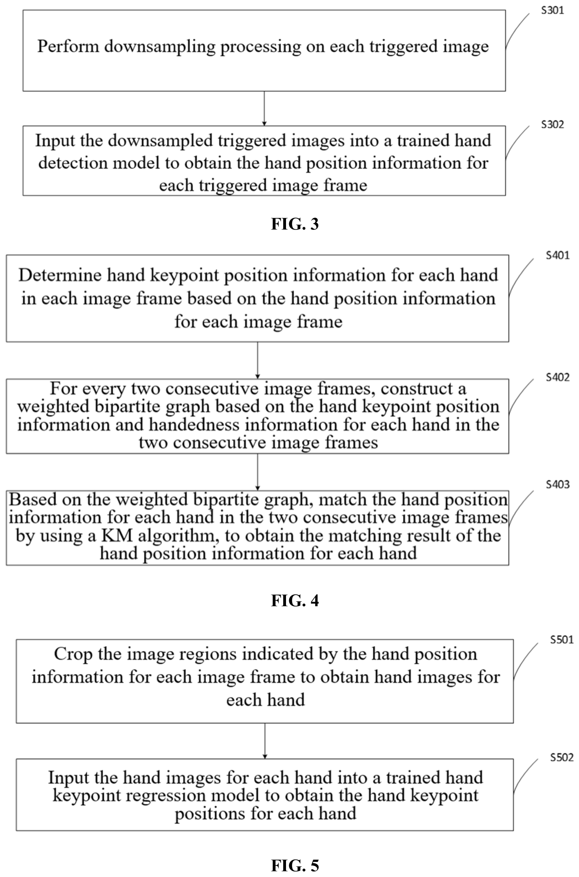

In an optional embodiment, referring to FIG. 3, which illustrates a flowchart of a position information determination method provided by Embodiment 1 of the present invention, the triggering hand detection on image frames at preset time intervals to obtain hand position information for each triggered image frame includes steps S301 to S302.

S301: performing downsampling processing on each triggered image.

Specifically, each triggered image is downsampled to reduce the image size.

S302: inputting the downsampled triggered images into a trained hand detection model to obtain the hand position information for each triggered image frame.

Specifically, the hand detection model is the Nanodet-Plus hand detection model.

In an optional embodiment, the determining hand position information for each non-triggered image frame based on the hand position information for the triggered image frame includes:
expanding the coordinate information for the hand bounding box for each hand in the triggered image frame by a preset multiple to obtain coordinate information for the hand bounding box for each non-triggered image frame, thereby determining the hand position information for each non-triggered image frame.

Specifically, for each non-triggered image frame, the hand bounding box from the historically most recent triggered image frame is scaled to obtain the hand bounding box for the non-triggered image frame, which serves as the hand position information for that frame. The historically most recent triggered image frame is the triggered image frame that precedes and is closest to the non-triggered image frame.

In an optional implementation, referring to FIG. 4, which illustrates a flowchart of a hand position information matching method according to Embodiment 1 of the present invention, the matching the hand position information for each hand based on the hand position information for every two consecutive image frames to obtain a matching result of the hand position information for each hand includes steps S401 to S403.

S401: determining hand keypoint position information for each hand in each image frame based on the hand position information for each image frame.

Specifically, the hand images containing each hand are cropped according to the hand bounding box information for each image frame, and then hand images for each hand are input into a hand 21-point keypoint regression model to obtain the position information for 21 hand keypoints in each image frame and the confidence of each hand keypoint.

S402: for every two consecutive image frames, constructing a weighted bipartite graph based on the hand keypoint position information and handedness information for each hand in the two consecutive image frames.

Specifically, the method for constructing the weighted bipartite graph is as follows.

For every two consecutive image frames, the set of hands detected in the latter image frame of the two consecutive image frames is denoted as A; the set of hands in the former image frame of the two consecutive image frames, i.e., the set of hands maintained within a previous preset length (optionally 3s) window, is denoted as B, and A and B are treated as the left and right parts of the bipartite graph, respectively. For each element a in A and each element b in B, the distance between each a and each b is calculated based on the hand keypoint position information of each hand. If the distance between a and b is less than a preset threshold D, a and b are connected, and the edge weight W(a, b) between a and b is set as: W(a, b) = 1 / (x * dist(a, b) + K), where if both a and b are left hands or right hands, x is a first preset parameter X0, otherwise x is a second preset parameter X1 (where 0 < X0 < X1), dist(a, b) represents the Euclidean distance between the wrist keypoint coordinates of a and b, and k is a preset fixed parameter (positive number).

S403: based on the weighted bipartite graph, matching the hand position information for each hand in the two consecutive image frames by using a KM algorithm, to obtain the matching result of the hand position information for each hand.

Specifically, based on the weighted bipartite graph constructed by the above method, the hand position information for each hand in the two consecutive images is matched via the KM algorithm. The matching results include a matching success and a matching failure. When the hand position information for a hand in the two consecutive images matches each other, it represents that the matching result for that hand is a matching success; when the hand position information for a hand in the two consecutive images does not match, it represents that the matching result for that hand is a matching failure.

In an optional implementation, referring to FIG. 5, which illustrates a flowchart of a hand keypoint positioning method according to Embodiment 1 of the present invention, the determining hand keypoint position information for each hand in each image frame based on the hand position information for each image frame includes steps S501 to S502:
S501: cropping the image regions indicated by the hand position information for each image frame to obtain hand images for each hand; and
S502: inputting the hand images for each hand into a trained hand keypoint regression model to obtain the hand keypoint positions for each hand.

Specifically, the hand keypoint regression model may also output the confidence of each hand keypoint and the handedness of each hand.

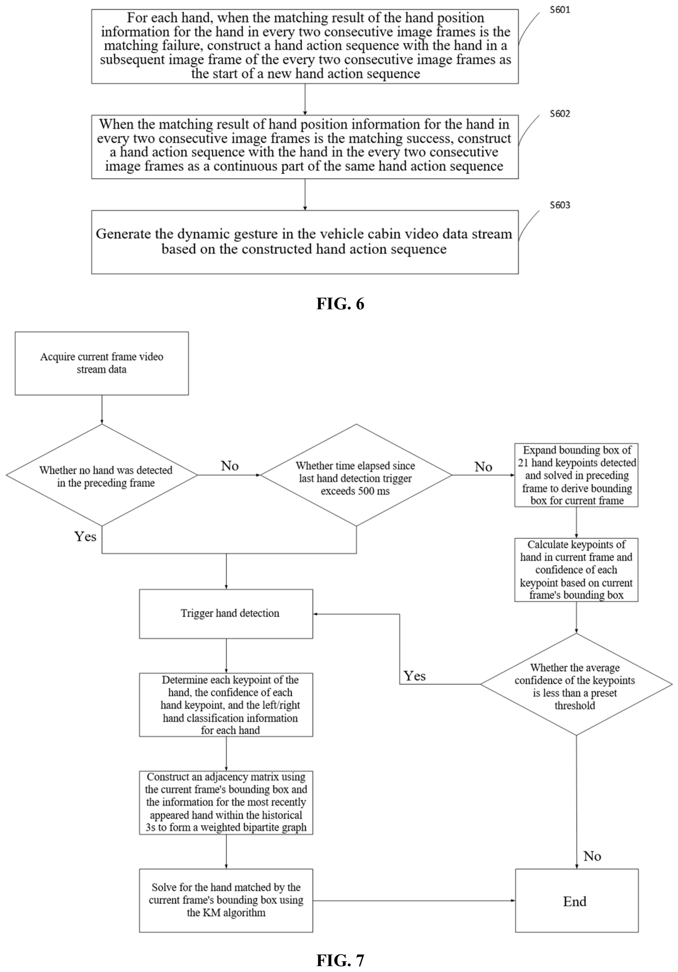

In an optional implementation, referring to FIG. 6, which illustrates a flowchart of a dynamic gesture determination method according to Embodiment 1 of the present invention, the determining a dynamic gesture in the vehicle cabin video data stream based on the matching result of the hand position information for each hand in every two consecutive image frames includes steps S601 to S603.

S601: for each hand, when the matching result of the hand position information for the hand in every two consecutive image frames is the matching failure, constructing a hand action sequence with the hand in a subsequent image frame of the every two consecutive image frames as the start of a new hand action sequence.

Specifically, a new hand identifier is assigned to that hand.

S602: when the matching result of the hand position information for the hand in every two consecutive image frames is the matching success, constructing a hand action sequence with the hand in the every two consecutive image frames as a continuous part of the same hand action sequence.

Specifically, the same hand identifier as the preceding image frame is assigned to that hand, i.e., the hand identifier from the preceding image frame is inherited.

S603: generating the dynamic gesture in the vehicle cabin video data stream based on the constructed hand action sequence.

Specifically, hands with the same hand identifier are treated as components of the same hand action sequence. Hand identifiers in different hand action sequences are different, while hand identifiers in the same hand action sequence are the same. For each hand action sequence, the hand in the hand action sequence is tracked and identified to obtain the dynamic gesture of that hand.

When the gesture tracking method provided by the present invention is applied to tracking and identifying gestures of cabin occupants in an intelligent cabin, referring to FIG. 7, which illustrates a flowchart of a gesture tracking method in an intelligent cabin according to Embodiment 1 of the present invention, the method specifically includes the following steps: acquiring current frame video stream data in real time; detecting whether no hand was detected in the preceding frame; if so, triggering hand detection; otherwise, determining whether the time elapsed since the last hand detection trigger exceeds 500 ms; if so, triggering hand detection; otherwise, expanding the bounding box of the 21 hand keypoints detected and solved by the preceding frame detection to derive the bounding box for the current frame, then calculating the keypoints of the hand in the current frame and the confidence of each keypoint based on the current frame's bounding box; and determining whether the average confidence of the keypoints is less than a preset threshold; if so, triggering hand detection; otherwise, ending hand tracking. When hand detection is triggered, each keypoint of the hand is determined, the confidence of each hand keypoint is determined, and the left/right hand classification information is determined for each hand; then, an adjacency matrix is constructed using the current frame's bounding box and the information for the most recently appeared hand within the historical 3s to form a weighted bipartite graph; subsequently, the hand matched by the current frame's bounding box is obtained using the KM algorithm to complete and end the hand tracking.

### Embodiment 2

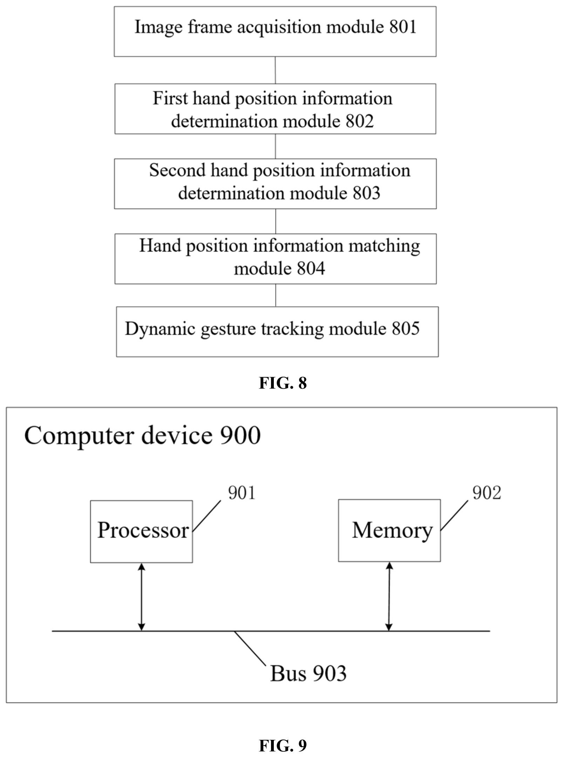

Referring to FIG. 8, which illustrates a schematic structural diagram of a dynamic gesture tracking apparatus provided by Embodiment 2 of the present invention, the apparatus includes:
an image frame acquisition module 801, configured to acquire a vehicle cabin video data stream, and capture images from the vehicle cabin video data stream to obtain a plurality of image frames;
a first hand position information determination module 802, configured to trigger hand detection on image frames at preset time intervals to obtain hand position information for each triggered image frame, wherein the hand position information contains coordinate information for a hand bounding box for each hand;
a second hand position information determination module 803, configured to determine, for each triggered image frame, hand position information for each non-triggered image frame based on the hand position information for the triggered image frame, wherein a non-triggered image frame is a video frame subsequent to the triggered image frame and prior to a subsequent triggered image frame;
a hand position information matching module 804, configured to match the hand position information for each hand based on the hand position information for every two consecutive image frames to obtain a matching result of the hand position information for each hand, wherein the matching result is either a matching success or a matching failure; and
a dynamic gesture tracking module 805, configured to determine a dynamic gesture in the vehicle cabin video data stream based on the matching result of the hand position information for each hand in every two consecutive image frames.

In an optional implementation, the apparatus further includes a position information update module. The position information update module is configured to:
after the determining, for each triggered image frame, hand position information for each non-triggered image frame based on the hand position information for the triggered image frame, determine hand keypoints and a confidence of each hand keypoint for each hand in each non-triggered image frame based on the hand position information for each non-triggered image frame;
for each non-triggered image frame, determine whether the average confidence of the hand keypoints of each hand in the non-triggered image frame exceeds a preset threshold;
if the average confidence of the hand keypoints of each hand in the non-triggered image frame does not exceed the preset threshold, trigger hand detection on the non-triggered image frame to obtain new hand position information for the non-triggered image frame; and
update the hand position information for the non-triggered image frame determined based on the hand position information for the triggered image frame by using the new hand position information for the non-triggered image frame.

In an optional implementation, the triggering hand detection on image frames at preset time intervals to obtain hand position information for each triggered image frame includes:
performing downsampling processing on each triggered image; and
inputting the downsampled triggered images into a trained hand detection model to obtain the hand position information for each triggered image frame.

In an optional embodiment, the determining hand position information for each non-triggered image frame based on the hand position information for the triggered image frame includes:
expanding the coordinate information for the hand bounding box for each hand in the triggered image frame by a preset multiple to obtain coordinate information for the hand bounding box for each non-triggered image frame, thereby determining the hand position information for each non-triggered image frame.

In an optional implementation, the matching the hand position information for each hand based on the hand position information for every two consecutive image frames to obtain a matching result of the hand position information for each hand includes:
determining hand keypoint position information for each hand in each image frame based on the hand position information for each image frame;
for every two consecutive image frames, constructing a weighted bipartite graph based on the hand keypoint position information and handedness information for each hand in the two consecutive image frames; and
based on the weighted bipartite graph, matching the hand position information for each hand in the two consecutive image frames by using a KM algorithm, to obtain the matching result of the hand position information for each hand.

In an optional implementation, the determining hand keypoint position information for each hand in each image frame based on the hand position information for each image frame includes:
cropping the image regions indicated by the hand position information for each image frame to obtain hand images for each hand; and
inputting the hand images for each hand into a trained hand keypoint regression model to obtain the hand keypoint positions for each hand.

In an optional implementation, the determining a dynamic gesture in the vehicle cabin video data stream based on the matching result of the hand position information for each hand in every two consecutive image frames includes:
for each hand, when the matching result of the hand position information for the hand in every two consecutive image frames is the matching failure, constructing a hand action sequence with the hand in a subsequent image frame of the every two consecutive image frames as the start of a new hand action sequence;
when the matching result of the hand position information for the hand in every two consecutive image frames is the matching success, constructing a hand action sequence with the hand in the every two consecutive image frames as a continuous part of the same hand action sequence; and
generating the dynamic gesture in the vehicle cabin video data stream based on the constructed hand action sequence.

### Embodiment 3

Based on the same disclosed concept, referring to FIG. 9, which illustrates a schematic structural diagram of a computer device provided by Embodiment 3 of the present invention. As shown in FIG. 9, the computer device 900 provided by Embodiment 3 of the present invention includes:
a processor 901, a memory 902, and a bus 903, wherein the memory 902 stores machine-readable instructions executable by the processor 901; when the computer device 900 is in operation, the processor 901 communicates with the memory 902 via the bus 903; and the machine-readable instructions, when executed by the processor 901, cause the processor to perform the steps of the gesture tracking method described in Embodiment 1.

### Embodiment 4

Based on the same disclosed concept, the present invention further provides a computer-readable storage medium storing a computer program that, when executed by a processor, cause the processor to perform the steps of the gesture tracking method described in any one of the above embodiments.

It can be clearly understood by those skilled in the art that, for the convenience and conciseness of description, the specific working processes of the systems and apparatuses described above may refer to the corresponding processes in the aforementioned method embodiments, and will not be repeated here.

The computer program product for gesture tracking provided by the embodiments of the present invention includes a computer-readable storage medium storing program code, wherein the instructions included in the program code may be used to execute the methods described in the above method embodiments. For specific implementation, reference can be made to the method embodiments, which will not be repeated here.

The gesture tracking apparatus provided by the embodiments of the present invention may be specific hardware on a device or software or firmware installed on the device. The implementation principles and technical effects of the apparatus provided by the embodiments of the present invention are the same as those of the aforementioned method embodiments. For brevity, reference can be made to the corresponding content in the aforementioned method embodiments for details not mentioned in the apparatus embodiments. It can be clearly understood by those skilled in the art that, for the convenience and conciseness of description, the specific working processes of the systems, apparatuses, and units described above may refer to the corresponding processes in the aforementioned method embodiments, and will not be repeated here.

In the embodiments provided by the present invention, it should be understood that the disclosed apparatuses and methods may be implemented in other ways. The apparatus embodiments described above are merely illustrative. For example, the division of units is only a logical functional division. In actual implementation, there may be other divisions. Similarly, multiple units or components may be combined or integrated into another system, or some features may be omitted or not executed. Additionally, the mutual couplings, direct couplings or communication connections shown or discussed may be indirect couplings or communication connections through some communication interfaces, apparatuses or units, and may be in electrical, mechanical or other forms.

The units described as separate components may or may not be physically separated, and the components displayed as units may or may not be physical units, that is, they may be located in one place or distributed to multiple network units. Some or all of the units may be selected according to actual needs to achieve the objectives of the solutions of the embodiments.

Additionally, the functional units in the embodiments provided by the present invention may be integrated into one processing unit, or each unit may exist physically separately, or two or more units may be integrated into one unit.

If the functions are implemented in the form of software functional units and sold or used as independent products, they may be stored in a computer-readable storage medium. Based on such understanding, the essence of the technical solutions, or the part contributing to the prior art, or part of the technical solutions of the present invention, may be embodied in the form of a software product. The computer software product is stored in a storage medium and includes several instructions for enabling a computer device (which may be a personal computer, a server, a network device, etc.) to perform all or part of the steps of the methods described in the various embodiments of the present invention. The aforementioned storage media include: U disk, mobile hard disk, read-only memory (ROM), random access memory (RAM), magnetic disk, optical disk, and other media that can store program code.

It should be noted that similar reference numerals and letters in the following drawings indicate similar items. Therefore, once an item is defined in one drawing, it does not need to be further defined and explained in subsequent drawings. Additionally, the terms "first," "second," "third," etc., are used only for distinguishing descriptions and should not be construed as indicating or implying relative importance.

Finally, it should be noted that the above embodiments are only specific implementations of the present invention, intended to illustrate the technical solutions of the present invention rather than limit them. The scope of protection of the present invention is not limited thereto. Although the present invention has been described in detail with reference to the aforementioned embodiments, those skilled in the art should understand that any person skilled in the art, within the technical scope disclosed in the present invention, may still modify or readily conceive variations to the technical solutions described in the aforementioned embodiments, or perform equivalent substitutions of some of the technical features. However, such modifications, variations, or substitutions do not cause the essence of the corresponding technical solutions to depart from the spirit and scope of the technical solutions of the embodiments of the present invention. All such modifications, variations, or replacements shall fall within the scope of protection of the present invention. Therefore, the scope of protection of the present invention shall be determined by the scope of the claims.

### INDUSTRIAL PRACTICALITY

According to the present invention, a vehicle cabin video data stream is acquired, image capture is performed on the vehicle cabin video data stream to obtain a plurality of image frames, and then hand detection on image frames is triggered at preset time intervals to obtain hand position information for each triggered image frame. This reduces the number of image frames requiring hand detection and the frequency of hand detection, as hand detection is only performed on triggered image frames, thereby lowering the computational power required for gesture tracking.

Then, for each triggered image frame, the hand position information for each non-triggered image frame is determined based on the hand position information for the triggered image frame. This allows for determining hand position information in non-triggered image frames without performing hand detection on other non-triggered image frames that have not undergone hand detection, thereby providing complete hand position information for each image frame for gesture detection.

Finally, the hand position information for each hand is matched based on the hand position information for every two consecutive image frames to obtain a matching result of the hand position information for each hand, and the dynamic gesture in the vehicle cabin video data stream is determined based on the matching result of the hand position information for each hand in every two consecutive image frames. This enables tracking, identification, and detection of dynamic gestures in the vehicle cabin video based on the matching result of hand position information in each image frame, achieving low-computational-power gesture tracking within the vehicle cabin.

By adopting the above solution, the number of hand detection triggers is limited. The model is only invoked to perform hand detection on image frames that have triggered hand detection, and is not used for image frames that have not triggered hand detection. This significantly reduces computational power consumption during gesture tracking. Simultaneously, based on the hand detection results of image frames that have triggered hand detection, the hand detection results of image frames that have not triggered hand detection are determined. This provides complete and accurate hand data for subsequent hand matching, effectively reduces missed hand detections, and improves the accuracy of hand detection. During gesture tracking, non-triggered image frames with inaccurate hand detection results are re-detected, reducing the probability of failing to track hands due to fast movement, and improving the accuracy of hand detection results. After trigger detection, a bipartite graph is constructed with specific weights, and the optimal matching is solved using a KM algorithm, which can accurately maintain the temporal information for hands. Thus, while reducing the computational power consumed for gesture tracking, lowering the requirements for device computing capability during gesture tracking, and minimizing the limitations of gesture tracking, it ensures accurate gesture tracking through various devices.

Furthermore, it can be understood that the gesture tracking method and apparatus, the computer device, and the readable storage medium provided by the embodiments of the present invention are reproducible and can be used in various industrial applications. For example, the gesture tracking method and apparatus, the computer device, and the readable storage medium provided by the embodiments of the present invention can be applied in the field of computer technology.

## Claims

1. A gesture tracking method, **characterized by** comprising:
acquiring a vehicle cabin video data stream, and capturing images from the vehicle cabin video data stream to obtain a plurality of image frames;
triggering hand detection on image frames at preset time intervals to obtain hand position information for each triggered image frame, wherein the hand position information contains coordinate information for a hand bounding box for each hand;
determining, for each triggered image frame, hand position information for each non-triggered image frame based on the hand position information for the triggered image frame, wherein a non-triggered image frame is a video frame subsequent to the triggered image frame and prior to a subsequent triggered image frame;
matching the hand position information for each hand based on hand position information for every two consecutive image frames to obtain a matching result of the hand position information for each hand, wherein the matching result is either a matching success or a matching failure; and
determining a dynamic gesture in the vehicle cabin video data stream based on the matching result of the hand position information for each hand in every two consecutive image frames.

2. The method according to claim 1, wherein after the determining, for each triggered image frame, hand position information for each non-triggered image frame based on the hand position information for the triggered image frame, the method further comprises:
determining hand keypoints and a confidence of each hand keypoint for each hand in each non-triggered image frame based on the hand position information for each non-triggered image frame;
for each non-triggered image frame, determining whether an average confidence of the hand keypoints of each hand in the non-triggered image frame exceeds a preset threshold;
in response to the average confidence of the hand keypoints of each hand in the non-triggered image frame not exceeding the preset threshold, triggering hand detection on the non-triggered image frame to obtain new hand position information for the non-triggered image frame; and
updating the hand position information for the non-triggered image frame determined based on the hand position information for the triggered image frame by using the new hand position information for the non-triggered image frame.

3. The method according to claim 1, wherein the triggering hand detection on image frames at preset time intervals to obtain hand position information for each triggered image frame comprises:
performing downsampling processing on each triggered image; and
inputting downsampled triggered images into a trained hand detection model to obtain the hand position information for each triggered image frame.

4. The method according to claim 1, wherein the determining hand position information for each non-triggered image frame based on the hand position information for the triggered image frame comprises:
expanding coordinate information for a hand bounding box for each hand in the triggered image frame by a preset multiple to obtain coordinate information for a hand bounding box for each non-triggered image frame, to determine the hand position information for each non-triggered image frame.

5. The method according to claim 1, wherein the matching the hand position information for each hand based on hand position information for every two consecutive image frames to obtain a matching result of the hand position information for each hand comprises:
determining hand keypoint position information for each hand in each image frame based on the hand position information for each image frame;
for every two consecutive image frames, constructing a weighted bipartite graph based on the hand keypoint position information and handedness information for each hand in the two consecutive image frames; and
based on the weighted bipartite graph, matching the hand position information for each hand in the two consecutive image frames by using a KM algorithm, to obtain the matching result of the hand position information for each hand.

6. The method according to claim 5, wherein the determining hand keypoint position information for each hand in each image frame based on the hand position information for each image frame comprises:
cropping image regions indicated by the hand position information for each image frame to obtain hand images for each hand; and
inputting the hand images for each hand into a trained hand keypoint regression model to obtain hand keypoint positions for each hand.

7. The method according to claim 1, wherein the determining a dynamic gesture in the vehicle cabin video data stream based on the matching result of the hand position information for each hand in every two consecutive image frames comprises:
for each hand, when the matching result of the hand position information for the hand in every two consecutive image frames is the matching failure, constructing a hand action sequence with the hand in a subsequent image frame of every two consecutive image frames as a start of a new hand action sequence;
when the matching result of the hand position information for the hand in every two consecutive image frames is the matching success, constructing a hand action sequence with the hand in every two consecutive image frames as a continuous part of the same hand action sequence; and
generating the dynamic gesture in the vehicle cabin video data stream based on the constructed hand action sequence.

8. A dynamic gesture tracking apparatus, **characterized by** comprising:
an image frame acquisition module, configured to acquire a vehicle cabin video data stream, and capture images from the vehicle cabin video data stream to obtain a plurality of image frames;
a first hand position information determination module, configured to trigger hand detection on image frames at preset time intervals to obtain hand position information for each triggered image frame, wherein the hand position information contains coordinate information for a hand bounding box for each hand;
a second hand position information determination module, configured to determine, for each triggered image frame, hand position information for each non-triggered image frame based on the hand position information for the triggered image frame, wherein a non-triggered image frame is a video frame subsequent to the triggered image frame and prior to a subsequent triggered image frame;
a hand position information matching module, configured to match the hand position information for each hand based on hand position information for every two consecutive image frames to obtain a matching result of the hand position information for each hand, wherein the matching result is either a matching success or a matching failure; and
a dynamic gesture tracking module, configured to determine a dynamic gesture in the vehicle cabin video data stream based on the matching result of the hand position information for each hand in every two consecutive image frames.

9. A computer device, **characterized by** comprising a processor, a memory, and a bus, wherein the memory stores machine-readable instructions executable by the processor; when the computer device is in operation, the processor communicates with the memory via the bus; and the machine-readable instructions, when executed by the processor, cause the processor to perform the steps of the gesture tracking method according to any one of claims 1 to 7.

10. A computer-readable storage medium, **characterized by** storing a computer program that, when executed by a processor, causes the processor to perform the steps of the gesture tracking method according to any one of claims 1 to 7.
